# EUROPEAN PATENT APPLICATION

(11) **EP 4 847 386 A1**
(43) Date of publication of application: **02.12.2026**
(21) Application number: 25179166.1
(22) Date of filing: 27.05.2025
(51) Int. Cl.: B64D 27/34, B64D 27/355, B64D 27/357, B64D 35/021, B64D 35/08

(54) **POWERTRAIN FOR AN AIRCRAFT AND AN AIRCRAFT WITH A POWERTRAIN**

(71) Applicant: AIRBUS Operations GmbH, 21129 Hamburg (DE)
(72) Inventor: Wolff, Christian, 21129 Hamburg (DE)
(74) Representative: KASTEL Patentanwälte PartG mbB

(57) **Abstract**

In order to improve the efficiency and redundancy of an electrically driven aircraft (100), a powertrain (1; 1') is provided which comprises a rotatable shaft (2) coupled to a load (3) and two or more powertrain sections (5) that are arranged in series and individually and independently couplable to the rotatable shaft (2) so as to drive the load (3). Each powertrain section (5) comprises an electric motor (6) and one or more electric motor drives (7). The electric motor drive (7) comprises a power supply (8) connected to a motor control unit (9) that is connected to the electric motor (6).

## Description

The invention relates to a powertrain for an aircraft, for example a propeller-driven aeroplane, and to an aircraft comprising a powertrain.

An example of an aircraft is an aeroplane, for example a fixed wing aeroplane. Some types of aeroplanes have one or more propellers for propulsion. Aircraft with electrical propulsion are being developed. An example of an electrical propulsion system for an aircraft comprises fuel cells which supply electricity to an electric motor which drives the propulsion propeller of the aircraft. The fuel cells receive hydrogen and oxygen and convert chemical energy into electrical energy, which results from the reaction of hydrogen in the presence of oxygen. Hydrogen is generally obtained from a hydrogen tank on board the aircraft and oxygen may be taken from the ambient air.

Published patent application US 2023/0399116 A1 discloses an example of an electrical supply system of an electric propulsion system of an aircraft. The electrical supply system comprises at least two sets of fuel cells, including at least two first sets of fuel cells, designed to supply electrically an electric motor or a set of electric motors driving a propulsion propeller. The system also comprises a first compressor configured to supply compressed air to at least part of the at least two first sets of fuel cells, and a first electric motor designed to drive the first compressor. The first electric motor designed to drive the first compressor comprises at least two electrical windings, each electrical winding being supplied electrically by means of a distinct set of fuel cells from amongst the at least two first sets of fuel cells.

An object of the invention is to improve the efficiency of electrical propulsion systems for aircraft.

This object is solved by the subject matter of the independent claims. Further advantages arise from the subject matter of the dependent claims.

A powertrain for an aircraft is provided. The powertrain comprises a rotatable shaft that is couplable to a load and two or more powertrain sections that are arranged in series and that are individually and independently couplable to the rotatable shaft so as to drive the load. Each of the powertrain sections comprises an electric motor, and one or more electric motor drives. The one or more electric motor drives each comprise a power supply, such as a fuel cell and/or battery, connected to a motor control unit that is connected to the electric motor.

The power supply may comprise at least one fuel cell and/or at least one battery. In an embodiment, the power supply preferably comprises at least one fuel cell.

Thus, the powertrain provides an electric drive for the load. The load may be one or more propulsion propellers so that the powertrain provides an electric drive, i.e. propulsion drive for the aircraft.

A powertrain architecture is provided which has a serial multi fuel cell engine arrangement for driving a propeller or propellers of an aircraft. The powertrain system has two or more powertrain sections that are arranged in series and multiple fuel cell stacks, multiple motor control units (MCUs) and one electric motor for each powertrain section. Each powertrain section is individually couplable to the shaft which drives the load, e.g. propeller.

This arrangement has the advantage that a gearbox between the propeller(s) and the powertrain can be omitted. Additionally, complexity, weight and volume is reduced, the reliability and robustness is increased. The size of the individual electric motors can be reduced as a lower motor diameter, a lower individual power demand per single motor and a lower voltage or lower current per single motor is required. Redundancy and reliability of the overall powertrain is increased. Modularity of the system is increased and integration flexibility is increased. Furthermore, different power classes of fuel stacks, MCUs and electric motors can be combined as appropriate. The diameter and length of the individual powertrains can be adapted to the needs of a particular application, e.g. aircraft.

The two or more powertrain sections are individually and independently couplable to the rotatable shaft. The powertrain further comprises at least one clutch to couple and decouple the load to the rotatable shaft and/or at least one clutch to couple and decouple the powertrain sections to the rotatable shaft individually. One clutch or coupling may be provided for each of the powertrain sections and for the load.

In an embodiment, a fuel cell is used as the source of electric power. A fuel cell has the advantage of high energy efficiency. The term fuel cell is also used to encompass arrangements including a stack of fuel cells. Any type of fuel cell suitable for the application may be used. One or more batteries may also be used in place of the fuel cell or in addition to the fuel cell. The fuel cell typically comprises an anode, a cathode, and an electrolyte that allows ions, e.g. positively charged hydrogen ions (protons), to move between the two sides of the fuel cell. At the anode, a catalyst causes the fuel to undergo oxidation reactions that generate ions (often positively charged hydrogen ions) and electrons. The ions move from the anode to the cathode through the electrolyte. At the same time, electrons flow from the anode to the cathode through an external circuit, producing direct current electricity. At the cathode, another catalyst causes ions, electrons, and oxygen to react, forming water and possibly other products. Individual fuel cells may produce relatively small electrical potentials so that the fuel cells are "stacked", or placed in series, to create sufficient voltage to meet an application's requirements.

In an alternative embodiment, one or more batteries, e.g. Li-ion batteries, are used as the source of electric power. In a further embodiment a combination of one or more fuel cells and one or more batteries, e.g. Li-ion batteries, is used as the source of electric power.

In an embodiment, the load is a propeller and the powertrain propels the aircraft. In an embodiment, the propeller is a propulsion propeller. Alternatively, or in addition, the load is an auxiliary power unit. The shaft may be used to drive the propeller or the auxiliary power unit.

In an embodiment, the propeller comprises two or more propeller sub-units. For example, the propeller sub-units may be counter-rotating propeller sub-units.

In an embodiment, the powertrain further comprises at least one further rotatable shaft that is concentric and connected in parallel with the rotatable shaft. The further rotatable shaft may be tubular and arranged concentrically around the rotatable shaft. The at least one further rotatable shaft is couplable to at least one of the powertrain sections. The at least one further rotatable shaft may be independently couplable and decouplable from at least one of the powertrain sections by activation of a clutch, for example. The powertrain sections may be couplable to the further rotatable shafts so as to drive the load by way of the further rotatable shafts in addition to the central rotatable shaft.

In an embodiment, at least one of the powertrain sections is couplable to the rotatable shaft and/or to at least one further rotatable shaft, for example by a clutch, so as to drive the propeller and propel the aircraft.

In an embodiment, at least one of the powertrain sections is couplable to the at least one further rotatable shaft, for example by a clutch, so as to drive an auxiliary power unit.

The auxiliary power unit may be configured to supply electric power and/or pneumatic power to auxiliary systems of the aircraft.

The invention also provides an aircraft which comprises a propulsion propeller and the powertrain of any one of the embodiments described herein. The powertrain may be used to propel the aircraft and drive the propeller. The aircraft may be a fixed wing aeroplane.

The invention also relates to the use of the powertrain of any one of the embodiments described herein in an aircraft, wherein the electric motor operates at cryogenic temperatures. An example of a cryogenic temperatures is 77 K. A temperature of 77 K can be provided by liquid nitrogen or alternatively any cryogenic liquid. The powertrain may be used to propel the aircraft and drive the propeller. The aircraft may be a fixed wing aeroplane.

Embodiments will now be described with reference to the drawings, in which:
Fig. 1 illustrates a schematic diagram of a powertrain for an aircraft according to an embodiment;
Fig. 2 illustrates a schematic diagram of a powertrain for an aircraft according to another embodiment, and
Fig. 3 illustrates a schematic view of an aircraft in which the powertrain can be used.

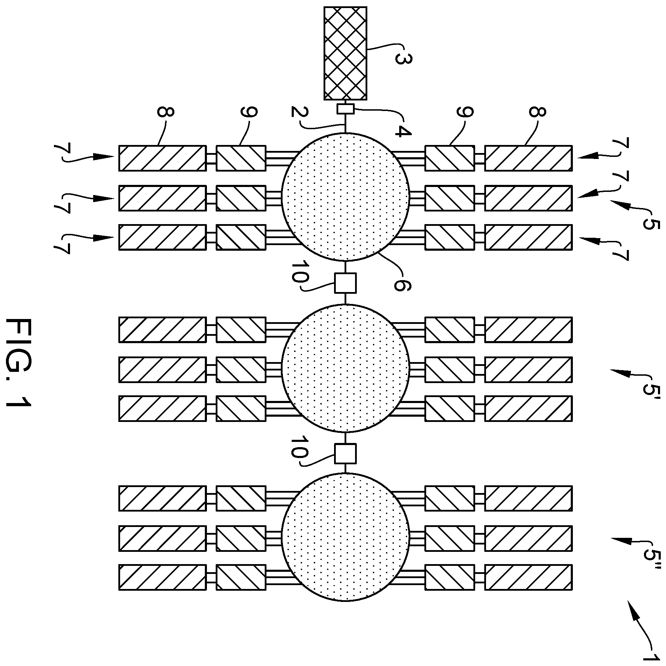

Fig. 1 illustrates a schematic diagram of a powertrain 1 according to an embodiment. The powertrain 1 may be used in an aircraft, for example a fixed wing aeroplane which is propeller driven. The powertrain 1 comprises a single rotatable shaft 2 which is couplable to a load 3. In this embodiment, the load 3 is a propeller and the powertrain 1 is used as a propulsion drive for an aircraft. The propeller 3 may be couplable to and decouplable from the shaft 2 by a clutch 4. When the load 3 has the form of a propeller 3, the propeller 3 may comprise two or more subunits, for example counter rotating propellers.

The powertrain 1 includes at least two powertrain sections 5. In the illustrated embodiment, three powertrain sections 5 are provided. The powertrain sections 5 are arranged in series and are couplable to the rotatable shaft 2. The powertrain sections 5 are individually couplable to the rotatable shaft 2 so that one, two or all of the power train sections 5 can be coupled to the shaft 2. Thus, the amount of torque supplied to the rotatable shaft 2 and to the load 3, e.g. propeller, can be varied. Thus, the powertrain 1 does not require the use of a gearbox between the rotatable shaft 2 and the load 3. By avoiding the need for a gearbox, weight can be saved and the efficiency of the powertrain 1 increased.

Each of the powertrain sections 5 comprises an electric motor 6 and one or more electric drives 7. Each of the electric drives 7 is associated with one electric motor 6 only. Each electric drive 7 comprises a power supply such as one or more fuel cells 8 and a motor control unit 9. The power supply may comprise one or more batteries in place of the fuel cell or fuel cells 8 or may include one or more batteries in addition to the fuel cell or fuel cells 8. The fuel cell 8 may be a fuel cell stack.

The motor control unit 9 is electrically connected to the fuel cell stack 8 of that electric drive 7 and to the electric motor 6 of that powertrain section 5. Consequently, each fuel cell stack 8 is connected to a single motor control unit 9 and each motor control unit 9 is electrically connected to a single electric motor 6 and a single fuel cell stack 8. The fuel cell 8 is connected to the motor control unit 9 with two connections, e.g. cables, (DC) and the motor control unit 9 is connected to the electric motor 6 with three connections, e.g. cables. The electric motor 6 is a multi-three-phase motor or a multi-"X"-phase motor.

In some embodiments, two or more electric drives 7 are provided for each electric motor 6. In the embodiment illustrated in Fig. 1, six electric drives 7 are provided for the electric motor 6. Each of the powertrain sections 5 of the powertrain 1 has the same structure. In other embodiments, one or more of the powertrain sections 5 of the powertrain 1 have a different structure from one or more of the other powertrain sections 5.

The fuel cells 8 receive hydrogen and oxygen and convert chemical energy into electrical energy, which results from the reaction of hydrogen in the presence of oxygen. This electrical energy is used to drive the electric motor 6 which in turn drives the shaft 2 and the load 3. Hydrogen is generally obtained from a hydrogen tank on board the aircraft and oxygen may be taken from the ambient air.

The term fuel cell is also used to encompass arrangements including a stack of fuel cells. Any type of fuel cell suitable for the application may be used. The fuel cell 8 typically comprises an anode, a cathode, and an electrolyte that allows ions, e.g. positively charged hydrogen ions (protons), to move between the two sides of the fuel cell. At the anode, a catalyst causes the fuel to undergo oxidation reactions that generate ions (often positively charged hydrogen ions) and electrons. The ions move from the anode to the cathode through the electrolyte. At the same time, electrons flow from the anode to the cathode through an external circuit, producing direct current electricity. At the cathode, another catalyst causes ions, electrons, and oxygen to react, forming water and possibly other products. Individual fuel cells may produce relatively small electrical potentials so that the fuel cells are "stacked", or placed in series, to create sufficient voltage to meet an application's requirements.

The electric motor 6 of the powertrain section 5 may be couplable to the rotatable shaft 2 by a clutch 10. In some embodiments, the clutch 10 is integrated into the electric motor 6. This configuration enables independent coupling of the electric motor to the rotatable shaft 2. In the embodiment illustrated in Fig. 1, three powertrain sections 5 are provided which are couplable in series to the single rotatable shaft 2. One clutch 10 is arranged between each of the powertrain sections 5. Consequently, by operation of the clutches 4, 10, one, two or three powertrain sections 5 can be coupled to the rotatable shaft 2 in order to drive the propeller 3 and propel the aircraft. The torque supplied to the load 3 can be adjusted by coupling and decoupling the powertrain sections 5 to and from the shaft 2. Thus, the load 3 is driven directly by the powertrain 1 so that a gearbox located between the shaft 2 and the load 3 can be omitted.

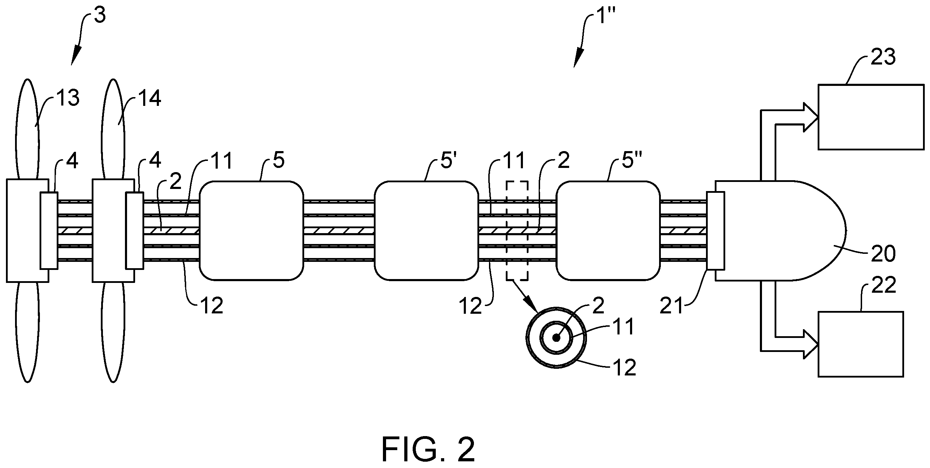

Fig. 2 illustrates a schematic view of a power train 1' for an aircraft according to another embodiment. In this embodiment, in addition to the single rotatable shaft 2 of the embodiment illustrated in Fig. 1, the powertrain 1' of this embodiment further comprises two concentrically arranged shafts 11 and 12. As can be seen in the cross-sectional view of the shaft system, the middle shaft 11 is concentrically arranged over the centre shaft 2 and the outer shaft 12 is concentrically arranged over the middle shaft 11. The middle shaft 11 and outer shaft 12 have a tubular shape so as to be concentrically arranged around the central shaft 2. The diameter of the outer shaft 12 is greater than the diameter of the middle shaft 11.

The shafts 2, 11 and 12 are individually drivable. The shafts 2, 11 and 12 are arranged in parallel since they are couplable to the load 3 and one of the powertrain sections 5, 5', 5". The structure of the powertrain sections 5, 5', 5" is not shown in Fig. 2 but may have the structure shown in Fig. 1, for example. The number of electric drives 7 for the electric motor 6 of each powertrain section 5, 5', 5" may vary from the six electric drives shown in Fig. 1. The powertrain sections 5, 5', 5" are arranged in series and are couplable to at least one of the shafts 2, 11, 12. In an embodiment, each of the powertrain sections 5, 5', 5" can be coupled to each of the shafts 2, 11 and 12. Each of the shafts 2, 11, 12 can be driven by one, two or all of the powertrain sections 5, 5', 5". This arrangement provides additional redundancy.

The powertrain sections 5 are individually couplable to at least one of the shafts 2, 11 and 12 by clutches 4 and 10. The load 3 may be driven by the rotation of one, two or three of the shafts 2, 11, 12. In an embodiment, the load 3 is driven by the central shaft 2 when a first power train section 5 is coupled to the central shaft 2. The load 3 is driven by the second shaft 11 when the second powertrain section 5' is coupled to the second shaft 11 and is driven by the third powertrain section 5" when the third powertrain section 5" is coupled to the outer shaft 12. The amount of torque supplied to the load 3 can be adjusted by coupling and decoupling the powertrain sections 5, 5', 5" from the shafts 2, 11, 12. The load 3 is driven directly by the powertrain 1' and the torque supplied to the load 3 can be adjusted by coupling and decoupling the power train sections 5, 5', 5" from the shafts 2, 11, 12. so that a gearbox located between the shafts 2, 11, 12 and the load 3 can be omitted.

In this embodiment, the load 3 has the form of a propeller with two propeller subunits 13, 14. The propeller sub-units 13, 14 may be counter-rotating propellers. Each of the propeller subunits 13, 14 is individually couplable to one or more of the shafts 2, 11, 12 by way of a clutch 4.

The use of the multiple concentric shafts 2, 11, 12 also enables the power train 1' to be electrically coupled to an auxiliary power unit 20 in addition to the propellers 13, 14. The auxiliary power unit 20 can be arranged at the opposing end of the shafts 2, 11, 12 to the propeller(s) 3. The powertrain 1' can be used as a propulsion system and/or a non-propulsion system. In an embodiment, powertrain 1' can be used as a propulsion system of an aircraft and/or a non-propulsion system of the aircraft depending on the flight phase.

The auxiliary power unit 20 may be couplable to the one or more of the shafts 2, 11, 12 by way of a clutch 21. The auxiliary power unit 20 may be used to provide electric power to one or more auxiliary systems 22. The auxiliary systems 22 may not contribute to the propulsion drive of the aircraft. The auxiliary power unit 20 may also be coupled to one or more pneumatic systems 23 of the aircraft.

In the powertrain 1' of this embodiment, one or more batteries may also be used in place of the fuel cell 8 or in addition to the fuel cell 8. The clutch 10 may be integrated into the electric motor 6. If the clutch 10 is integrated into the electric motor 6, three clutches are provided for each electric motor 6 so that the electric motor 6 can be individually and independently coupled to one or more of the three shafts 2, 11, 12.

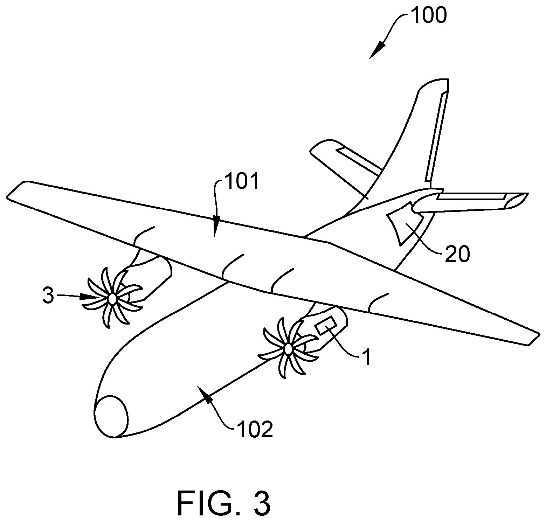

Fig. 3 illustrates a schematic view of an aircraft 100 which may comprise the powertrain 1 of any one of the embodiments described herein. The aircraft 100 is a fixed wing propeller-driven aeroplane and has wings 101 that extend from opposing sides of a fuselage 102. In the illustrated aircraft 100, two propellers 3 are provided, one on each wing. In other types of aircraft, one propeller may be provided on the nose of the fuselage or more than two propellers may be used for propulsion of the aircraft 100. The powertrain 1 and the auxiliary system 22 are indicated schematically in Fig. 3. The powertrain 1, 1' is used to drive the propeller(s) 3 and provide the propulsion drive of the aircraft 100.

An aircraft 100 with electrical propulsion is provided, since the powertrain 1, 1' comprises at least one power source, such as one or more fuel cells 8 and/or one or more batteries, which supply electricity to an electric motor 6 which drives the propulsion propeller 3 of the aircraft 100.

The direction of rotation of the shaft or shafts 2, 11, 12 may be reversed. For example, after landing of the aircraft 100, the direction of rotation of the propellers 3 can be reversed. Reversal of the direction of rotation may be used to assist in the deceleration of the aircraft 100.

In an embodiment, the electric motor 6 operates at cryogenic temperatures. Cryogenic temperatures may be used to allow higher currents and increase torque.

In some embodiments, a multi-shaft torque principle is used and provides a multi-redundant and adjustable generation of propulsive and non-propulsive power. The multi shaft arrangement may include two or more rotatable concentric shafts and individual local mechanical couplings/clutches which can be switched independently to the different loads or uses, e.g. a first propeller, a second propeller and an auxiliary power unit.

In some embodiments, two or more concentric shafts may be used as appropriate. Thus, a second propeller e.g. a counter rotating propeller, and/or an auxiliary power unit can be mechanically connected to the shaft via couplings, e.g. clutches as appropriate, analogous to the arrangement of the auxiliary power unit disclosed in European patent No. EP 3 040 276 B1. Thus, a fully combined propulsive and non-propulsive system can be provided.

The proposed architecture allows the implementation of several consecutively installed powertrain arrangements on one single rotating shaft, or, alternatively, on two or more parallel concentric rotating shafts. Cutches may be used to couple and decouple the powertrain sections from the shaft or shafts. The propeller driven by the shaft or shafts may comprise of a single propeller or two or more propeller sub-units such as counter rotating propellers, etc. One of the rotating shafts may drive an auxiliary power unit. There is no need at all for a gearbox.

The number, size and design of the individual electric motors, MCUs, fuel cell stacks, rotating shafts and propellers may be adapted to the specific aircraft needs. For example, the electric motors of the powertrain sections can be configured in different power classes, as well as the MCUs and fuel cell stacks. The serial multi fuel cell engine arrangement can provide torque for various uses including propulsive and/or non-propulsive uses.

In the event that one of the electric motors 6 should cease to operate as desired, this electric motor 6 can be decoupled from the shaft, e.g. one of the shafts 2, 11, 12, by operation of the clutch 4, 10. All of the electric motors 6 may be couplable to all of the shafts 2, 11, 12 individually. This arrangement provides improved redundancy and also enables the torque applied to the shafts 2, 11, 12 to be varied.

The electric motor arrangement may be operated under cryogenic conditions. This may be performed to allow higher currents, if required.

### List of reference signs:

- 1: powertrain
- 1': powertrain
- 2: rotatable shaft
- 3: load
- 4: clutch
- 5: powertrain section
- 5': powertrain section
- 5": powertrain section
- 6: electric motor
- 7: electric drive
- 8: fuel cell
- 9: motor control unit
- 10: clutch
- 11: rotatable concentric shaft
- 12: rotatable concentric shaft
- 13: propeller subunit
- 14: propeller subunit
- 20: auxiliary power unit
- 21: clutch
- 22: auxiliary electric system
- 23: pneumatic system
- 100: aircraft
- 101: wing
- 102: fuselage

## Claims

1. A powertrain (1; 1') for an aircraft (100), the powertrain (1; 1') comprising:
a rotatable shaft (2) couplable to a load (3);
two or more powertrain sections (5, 5', 5") arranged in series and individually and independently couplable to the rotatable shaft (2) so as to drive the load (3),
wherein the powertrain section (5, 5', 5") comprises:
an electric motor (6), and
one or more electric motor drives (7), wherein the electric motor drive (7) comprises a power supply (8) connected to a motor control unit (9) that is connected to the electric motor (6).

2. The powertrain (1; 1') according to claim 1, further comprising at least one clutch (4) to couple and decouple the load (3) to the rotatable shaft (2) and/or at least one clutch (10) to couple and decouple individually and independently the powertrain sections (5, 5', 5") to the rotatable shaft (2).

3. The powertrain (1; 1') according to claim 1 or claim 2, wherein the load (3) is a propeller and the powertrain (1; 1') propels the aircraft and/or the load (3) is an auxiliary power unit (20).

4. The powertrain (1; 1') according to claim 3, wherein the propeller (3) comprises two or more propeller sub-units (13; 14).

5. The powertrain (1') according to any one of claims 1 to 4, further comprising at least one further rotatable shaft (11; 12) that is concentric and connected in parallel with the rotatable shaft (2).

6. The powertrain (1') according to claim 5, wherein the at least one further rotatable shaft (11; 12) is independently couplable to at least one of the powertrain sections (5, 5', 5").

7. The powertrain (1') according to claim 5 or claim 6, wherein at least one of the powertrain sections (5, 5', 5") is couplable to the rotatable shaft (2) and /or at least one further rotatable shaft (11; 12) so as to drive the propeller (3) and propel the aircraft (100).

8. The powertrain according to any one of claims 5 to 7, wherein at least one of the powertrain sections (5, 5', 5") is couplable to the at least one further rotatable shaft (11; 12) so as to drive an auxiliary power unit (20).

9. The powertrain (1') according to claim 8, wherein the auxiliary power unit (20) is configured to supply electric power and/or pneumatic power to auxiliary systems (22; 23) of the aircraft (100).

10. The powertrain (1, 1') according to any one of claims 1 to 9, wherein the power supply (8) comprises at least one of the group consisting of a fuel cell and a battery.

11. An aircraft (100), comprising a propulsion propeller (3) and the powertrain (1; 1') of any one of claims 1 to 10.

12. Use of the powertrain (1; 1') of any one of claims 1 to 10 in an aircraft, wherein the electric motor (6) operates at cryogenic temperatures.
